# EUROPEAN PATENT SPECIFICATION

(11) **EP 2 220 666 B1**
(45) Date of publication and mention of the grant of the patent: **18.04.2012**
(21) Application number: 08864581.7
(22) Date of filing: 17.12.2008
(51) Int. Cl.: H01H 71/74

(54) **TRIP UNIT AND ELECTRICAL SWITCHING APPARATUS INCLUDING A MOVABLE INDICATOR TO INDICATE SELECTION OF AN ARC REDUCTION MAINTENANCE SYSTEM CURRENT CONDITION**
AUSLÖSEEINHEIT UND ELKTRISCHES SCHALTGERÄT MIT EINEM BEWEGLICHEN ANZEIGER ZUR ANZEIGE DER AUSWAHL DES STROMZUSTANDES EINES LICHTBOGENREDUKTIONSINSTANDHALTUNGSSYSTEMS
UNITÉ DE DÉCLENCHEMENT ET APPAREIL DE COMMUTATION ÉLECTRIQUE COMPORTANT UN INDICATEUR MOBILE POUR INDIQUER LA SÉLECTION D'UNE CONDITION DE COURANT DE SYSTÈME DE MAINTIEN DE RÉDUCTION D'ARCS ÉLECTRIQUES

(30) Priority: 18.12.2007 US 958938
(43) Date of publication of application: 25.08.2010
(73) Proprietor: Eaton Corporation, Cleveland, Ohio 44114-2584 (US)
(72) Inventor: ROBINSON, Judy, A., Atlanta, GA 30341 (US); CARLINO, Harry, J., Export, PA 15632 (US); ZINDLER, Mark, O., Mckees Rocks, PA 15136 (US)
(74) Representative: Wagner, Karl H.
(86) International application number: PCT/IB2008/003513
(87) International publication number: WO 2009/081255

(56) References cited:
- US-A1- 2007 211 400
- US-B2- 7 203 040

## Description

### BACKGROUND OF THE INVENTION

### Field of the Invention

This invention pertains generally to electrical switching apparatus and, more particularly, to electrical switching apparatus, such as circuit breakers, including a trip unit. The invention also relates to trip units for circuit interrupters.

### Background Information

Electrical switching apparatus such as circuit interrupters and, in particular, circuit breakers of the molded case variety, are well known in the art. See, for example, U.S. Patent No. 5,341,191.

Circuit breakers are used to protect electrical circuitry from damage due to an overcurrent condition, such as an overload condition or a relatively high level short circuit or fault condition. Molded case circuit breakers typically include a pair of separable contacts per phase. The separable contacts may be operated either manually by way of a handle disposed on the outside of the case or automatically in response to an overcurrent condition. Typically, such circuit breakers include an operating mechanism, which is designed to rapidly open and close the separable contacts, and a trip unit, which senses overcurrent conditions in an automatic mode of operation. Upon sensing an overcurrent condition, the trip unit trips the operating mechanism to a trip state, which moves the separable contacts to their open position.

Industrial circuit breakers often use a circuit breaker frame, which houses a trip unit. See, for example, U.S. Patent Nos. 5,910,760; and 6,144,271. The trip unit may be modular and may be replaced, in order to alter the electrical properties of the circuit breaker.

It is well known to employ trip units which utilize a microprocessor to detect various types of overcurrent trip conditions and to provide various protection functions, such as, for example, a long delay trip, a short delay trip, an instantaneous trip, and/or a ground fault trip. The long delay trip function protects the load served by the protected electrical system from overloads and/or overcurrents. The short delay trip function can be used to coordinate tripping of downstream circuit breakers in a hierarchy of circuit breakers. The instantaneous trip function protects the electrical conductors to which the circuit breaker is connected from damaging overcurrent conditions, such as short circuits. As implied, the ground fault trip function protects the electrical system from faults to ground.

The earliest electronic trip unit circuit designs utilized discrete components such as transistors, resistors and capacitors.

More recently, designs, such as disclosed in U.S. Patent Nos. 4,428,022; and 5,525,985, have included microprocessors, which provide improved performance and flexibility. These digital systems sample the current waveforms periodically to generate a digital representation of the current. The microprocessor uses the samples to execute algorithms, which implement one or more current protection curves.

Each circuit breaker is designed for a specific maximum continuous current. This current rating may be set by a suitable selection mechanism, such as by a rotary switch or by selection of a resistor (e.g., a "rating plug") which converts a current to a voltage for use by the trip unit. In some instances, a single circuit breaker frame may be easily adapted for installations which call for a range of maximum continuous currents, up to the design limits of the frame, through use of the selection mechanism by which the current rating of the device can be established. Typically, the pick-up currents for the various protection functions have been selectable multiples or fractions of this current rating. Thus, instantaneous protection trips the device any time the current reaches a selected multiple of the rated current, such as, for example, ten times the rated current. Pick-up for short delay protection is a lesser multiple of the rated current, while pick-up current for long delay protection may be a fraction of the rated current. Typically, the short delay trip is only generated when the short delay pick-up current is exceeded for a short delay time interval, although, in some applications, an inverse time function is also used for short delay protection.

Maintenance personnel often need to work on low voltage electric power circuits that are energized, for instance, when testing circuit breakers. Maintenance and test personnel can be exposed to live terminals when working or making measurements on energized switchgear. The potential for arc flash resulting from an accidental fault requires that such personnel wear protective clothing.

U.S. Patent No. 7,203,040 discloses a circuit breaker and trip unit including an arc reduction maintenance switch for reduction of arc flash energy and the severity of arc flash exposure. Specific trip functions are manually overridden with a maintenance trip function that reduces arc energy should a fault occur. The manually enabled and disabled maintenance trip function reduces the pickup currents of the specified trip functions and/or reduces or eliminates the time delays of the specified trip functions. For example, instantaneous trip is reduced from 10 times to 2 times rated current, short delay pickup is reduced from 8 times to 1.5 times rated current, the short time delay of 0.5 second is reduced to 0.050 second (essentially no time delay), the (equipment protection) ground fault pickup current is reduced from 0.5 times to 0.25 times rated current, and the ground fault time delay is reduced from 0.5 second to 0.050 second (essentially no time delay). As another example, instantaneous trip is reduced from 10 times to 4 times rated current, short delay pickup is reduced from 8 times to 3 times rated current, the short time delay of 0.5 second is reduced to 0.050 second (essentially no time delay), the (equipment protection) ground fault pickup current is reduced from 0.5 times to 0.25 times rated current, and the ground fault time delay is reduced from 0.5 second to 0.050 second (essentially no time delay). A light emitting diode (LED) is energized with the maintenance switch in the maintenance position to alert personnel of the change in the trip function. Other means for signaling the implementation of the maintenance trip functions can be provided such as a text message where the trip unit has a visual display.

A problem with these electrically driven alerts and signals is that they are not provided to maintenance personnel during the time when the power circuit is de-energized, such as when the circuit breaker de-energizes the power circuit.

There is room for improvement in electrical switching apparatus, which enable selection of an arc reduction maintenance system.

There is also room for improvement in trip units, which enable selection of an arc reduction maintenance system.

### SUMMARY OF THE INVENTION

These needs and others are met by embodiments of the invention, which provide a movable indicator to indicate whether one of a number of predetermined instantaneous current conditions or one of a number of predetermined arc reduction maintenance system current conditions is selected by a selector switch.

In accordance with one aspect of the invention, an electrical switching apparatus comprises: separable contacts; an operating mechanism structured to open and close the separable contacts; a trip mechanism cooperating with the operating mechanism to trip open the separable contacts, the trip mechanism comprising: a housing comprising a first opening and a second opening, a sensor structured to sense a current flowing through the separable contacts and to provide a signal representative of the current, a selector switch disposed proximate the first opening of the housing, the selector switch being structured to select one of a number of predetermined instantaneous current conditions and a number of predetermined arc reduction maintenance system current conditions, a movable indicator cooperating with the selector switch, the movable indicator being disposed proximate the second opening of the housing, the movable indicator being structured to indicate whether one of the number of predetermined instantaneous current conditions or one of the number of predetermined arc reduction maintenance system current conditions is selected by the selector switch, and a trip circuit cooperating with the sensor and the selector switch to evaluate the signal representative of the current with respect to the selected one of the number of predetermined instantaneous current conditions and the number of predetermined arc reduction maintenance system current conditions, and responsively cause the operating mechanism to trip open the separable contacts.

The selector switch may be a rotary selector switch including a pivot member pivotally disposed with respect to the housing and a selector member coupled to the pivot member, the selector member being disposed at the first opening of the housing; and the movable indicator may be a peripheral member peripherally disposed about the selector member and movable therewith, the peripheral member being disposed at the second opening of the housing.

The peripheral member may include a first portion with a first indicia corresponding to the number of predetermined instantaneous current conditions and a different second portion with a different second indicia corresponding to the number of predetermined arc reduction maintenance system current conditions.

The housing may include a faceplate having the first opening and the second opening; the trip circuit may include a printed circuit board coupled to the faceplate; the selector switch may be pivotally coupled to the printed circuit board; and the movable indicator may be peripherally coupled to the selector switch, the movable indicator being structured to pivot with the selector switch.

The selector switch may be a rotary selector switch including a pivot member pivotally disposed with respect to the housing and a selector member coupled to the pivot member, the selector member may be disposed at the first opening of the housing; and the movable indicator may comprise a peripheral member peripherally disposed about the selector member and an indicator member coupled to the peripheral member, the indicator member being disposed at the second opening of the housing.

As another aspect of the invention, a trip unit is for a circuit interrupter for an electrical circuit. The trip unit comprises: a housing comprising a first opening and a second opening; a sensor structured to sense a current flowing in the electrical circuit and to provide a signal representative of the current; a selector switch disposed proximate the first opening of the housing, the selector switch being structured to select one of a number of predetermined instantaneous current conditions and a number of predetermined arc reduction maintenance system current conditions; a movable indicator cooperating with the selector switch, the movable indicator being disposed proximate the second opening of the housing, the movable indicator being structured to indicate whether one of the number of predetermined instantaneous current conditions or one of the number of predetermined arc reduction maintenance system current conditions is selected by the selector switch; and a trip mechanism cooperating with the sensor and the selector switch to evaluate the signal representative of the current with respect to the selected one of the number of predetermined instantaneous current conditions and the number of predetermined arc reduction maintenance system current conditions, and responsively generate a trip signal.

### BRIEF DESCRIPTION OF THE DRAWINGS

A full understanding of the invention can be gained from the following description of the preferred embodiments when read in conjunction with the accompanying drawings in which:
Figure 1 is an isometric view of a circuit breaker in accordance with embodiments of the invention.
Figure 2 is a schematic diagram in block form of the circuit breaker of Figure 1 shown connected to an electrical system.
Figure 3 is a top plan view of the trip unit of Figure 1.
Figure 4 is an isometric view of the faceplate assembly of the trip unit of Figure 1.
Figure 5 is an exploded isometric view of the faceplate assembly of the trip unit of Figure 1.
Figure 6 is a plan view of the legend of the faceplate of Figure 1.
Figure 7 is an isometric view of the trip unit of Figure 1 with the faceplate removed to show internal structures.
Figure 8 is a top plan view of the movable indicator and the selector switch of Figure 5.
Figure 9 is a top plan view of a movable indicator and a selector switch in accordance with another embodiment of the invention.

### DESCRIPTION OF THE PREFERRED EMBODIMENTS

As employed herein, the term "number" shall mean one or an integer greater than one (*i.e*., a plurality).

As employed herein, the term "processor" means a programmable analog and/or digital device that can store, retrieve, and process data; a computer; a workstation; a personal computer; a microprocessor; a microcontroller; a microcomputer; a central processing unit; a mainframe computer; a mini-computer; a server; a networked processor; or any suitable processing device or apparatus.

As employed herein, the statement that two or more parts are "connected" or "coupled" together shall mean that the parts are joined together either directly or joined through one or more intermediate parts. Further, as employed herein, the statement that two or more parts are "attached" shall mean that the parts are joined together directly.

As employed herein, the term "indicia" means a distinctive marking or something that serves to indicate. Non-limiting examples of indicia include colors, distinctive patterns, a number of characters, distinctive symbols, distinctive labels and other human discernable indications.

As employed herein, the term "selector switch" means a rotary selector switch, a pivotally coupled selector switch, or any suitable selection apparatus structured to select one current condition from a plurality of different current conditions.

As employed herein, the term "movable indicator" means a movable indication apparatus.

The invention is described in association with a three-phase circuit breaker, although the invention is applicable to electrical switching apparatus having any number of phases or poles, and to trip units for such electrical switching apparatus.

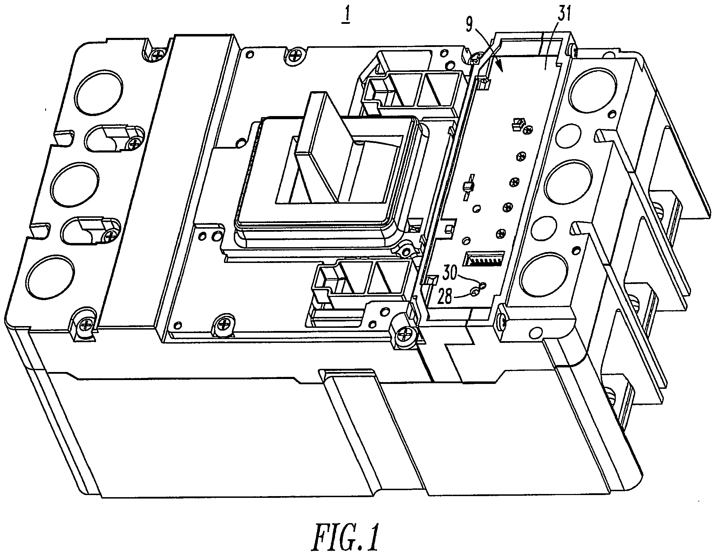

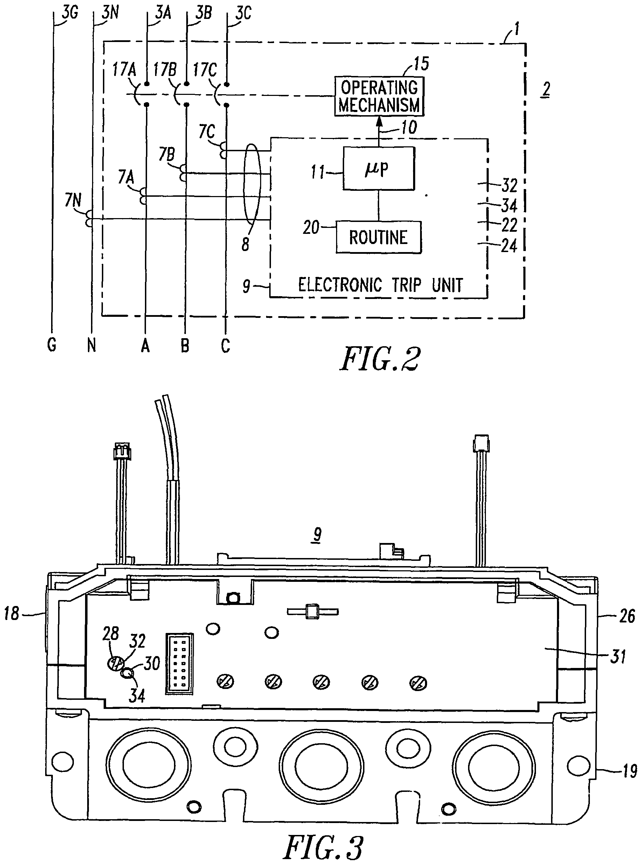

Figure 1 shows an electrical switching apparatus, such as a circuit interrupter as is shown by the example circuit breaker 1. Referring to Figure 2, this circuit breaker 1 protects an example electrical circuit, such as electrical system 2, which includes three phase (e.g., A, B and C) electrical circuit conductors 3A, 3B and 3C, and which may also include a neutral (N) conductor 3N and a ground (G) conductor 3G. The example circuit breaker is a microprocessor-based circuit breaker 1. The circuit breaker 1 includes current transformers (CTs) 7A, 7B, 7C, and 7N, which generate signals 8 representative of the currents flowing in the respective phase conductors 3A, 3B and 3C, and in the neutral conductor 3N if desired.

A trip mechanism, such as a trip circuit as shown by the example electronic trip unit 9, monitors the currents sensed by these CTs 7A,7B,7C,7N and generates a trip signal 10 in response to predetermined current and/or predetermined current/time conditions. The electronic trip unit 9 incorporates a suitable processor, such as the example microprocessor (µP) 11. The microprocessor-based electronic trip unit 9 may be similar to the type disclosed in U.S. Patent Nos. 4,752,853; and 6,167,329, which are hereby incorporated herein by reference. The electronic trip unit 9 preferably incorporates a resistor (not shown) or other suitable mechanism that sets the frame rating (e.g., the maximum continuous current) that will be permitted by the circuit breaker 1.

The electronic trip unit 9 generates the trip signal 10 in response to the specified overcurrent conditions. As is conventional, an operating mechanism 15 is structured to open and close sets of separable contacts 17A, 17B and 17C. The trip signal 10 actuates (through a suitable trip device (e.g., without limitation, trip coil; trip solenoid (not shown)) the operating mechanism 15, which responsively opens the sets of separable contacts 17A, 17B and 17C, in order to interrupt current through the corresponding phase conductors 3A, 3B and 3C of the electrical system 2. Hence, the trip unit 9 cooperates with the operating mechanism 15 to trip open the separable contacts 17A,17B,17C.

The circuit breaker 1 and, in particular, the electronic trip unit 9, provides several conventional modes of protection. In particular, an instantaneous protection mode and an Arc Reduction Maintenance System (ARMS) protection mode are provided. Long delay, short delay and/or ground fault protection may also be provided.

The trip unit 9 includes a routine 20 executed by the µP 11. The routine 20 is structured to evaluate the signals 8 with respect to a selected one of a number of predetermined instantaneous current conditions 22 and a number of predetermined arc reduction maintenance system current conditions 24, and responsively generate the trip signal 10.

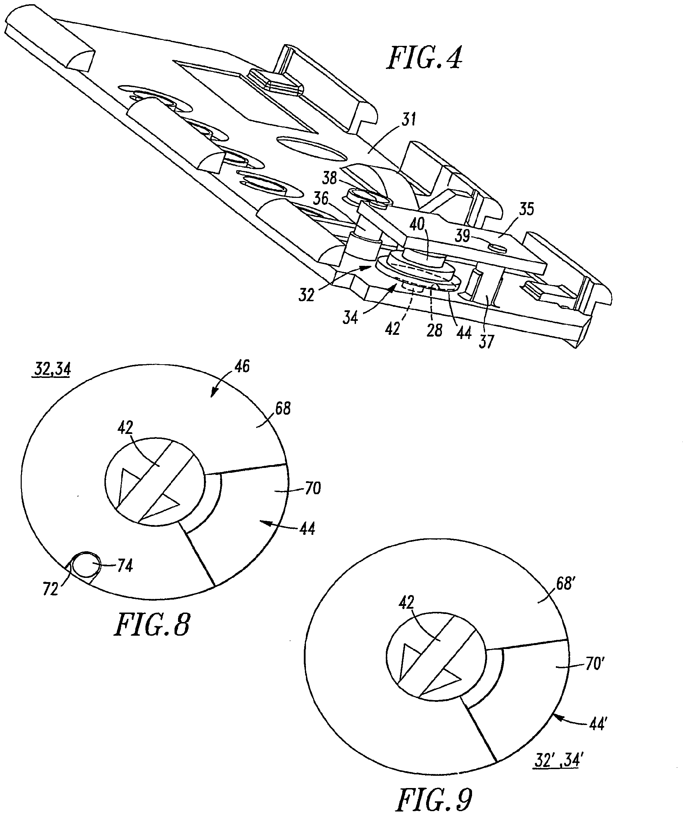

As best shown in Figure 3, the trip unit 9 includes a housing 26 having a first opening 28 and a second opening 30. A selector switch 32 is disposed proximate the first opening 28 and is structured to select one of the number of predetermined instantaneous current conditions 22 and the number of predetermined arc reduction maintenance system current conditions 24. A movable indicator 34 cooperates with the selector switch 32 and is disposed proximate the second opening 30. As will be explained below in connection with Figures 4, 5, 7 and 8, the movable indicator 34 is structured to indicate whether one of the number of predetermined instantaneous current conditions 22 or one of the number of predetermined arc reduction maintenance system current conditions 24 is selected by the selector switch 32.

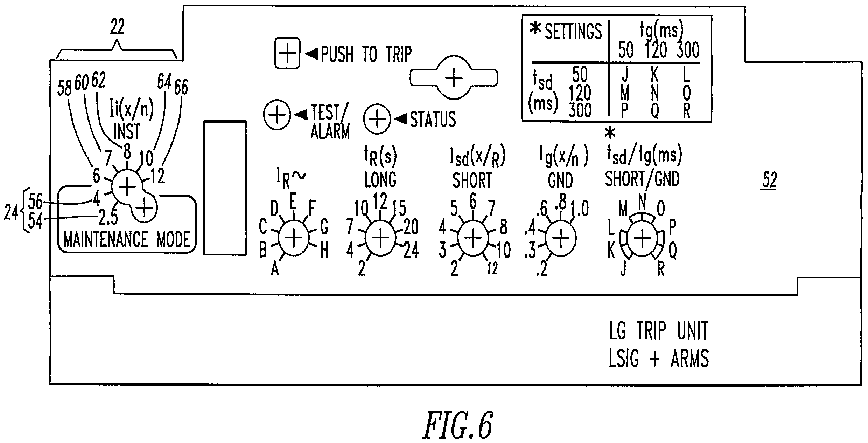

The trip unit 9 cooperates with the CTs 7A, 7B, 7C using the routine 20 to evaluate the signals 8 with respect to the selected one of the current conditions 22,24, and responsively cause the operating mechanism 15 to trip open the separable contacts 17A,17B,17C. For example, with reference to Figure 6, the routine 20 causes the instantaneous trip of the separable contacts 17A,17B,17C when the signals 8 correspond to currents that exceed a selected multiple (e.g., without limitation, between about 2.5 to about 12) of the frame rating of the circuit breaker 1:

Referring to Figures 3-5, the trip unit housing 26 (Figure 3) includes a faceplate 31 having the first opening 28 and the second opening 30. The trip unit 9 includes a printed circuit board 35 coupled to the faceplate 31 by standoffs, such as molded offsets 36,37, and fasteners 38,39. For example, coupling the printed circuit board 35 to the faceplate 31 with the molded offsets 36,37 of the faceplate 31 (e.g., without limitation, a thermoplastic component) reduces the count of molded components by eliminating the need to change molds (not shown) for the base 18 and the cover 19 (e.g., without limitation, thermoset components) of the trip unit 9 (Figure 3).

The selector switch 32 is pivotally coupled to the printed circuit board 35. The movable indicator 34 is peripherally coupled to the selector switch 32 and is structured to pivot with the selector switch 32. In particular, the selector switch 32 is a rotary selector switch including a pivot member 40 pivotally disposed with respect to the trip unit housing 26 and a selector member 42 coupled to the pivot member 40. The selector member 42 is disposed at the first housing opening 28. The movable indicator 34 includes a peripheral member 44 peripherally disposed about the selector member 42 and movable therewith. The peripheral member 44 is disposed at the second housing opening 30. The pivot member 40 includes an opening 48 that receives a pivot post 50 that is coupled to the printed circuit board 35. The movable indicator 34 also includes an indicator member 46 coupled to the peripheral member 44. The indicator member 46 is disposed at the second housing opening 30.

The example trip unit 9 (Figures 1-3) employs the movable indicator 34 and, for example, has insufficient power (or no power under certain conditions) for an LED or other lit status non-movable indicator.

Figure 6 shows an example legend 52 of the faceplate 31 of Figure 1. In this example, the circuit breaker 1 includes a frame rating. The number of predetermined arc reduction maintenance system current conditions 24 include a first current condition 54 of about two and one-half times the frame rating and a second current condition 56 of about four times the frame rating. The number of predetermined instantaneous current conditions 22 include a plurality of different current conditions 58,60,62,64,66 between about six times the frame rating at condition 58 and about twelve times the frame rating at condition 66. All of the different instantaneous current conditions 58,60,62,64,66 are greater than all of the different arc reduction maintenance system current conditions 54,56.

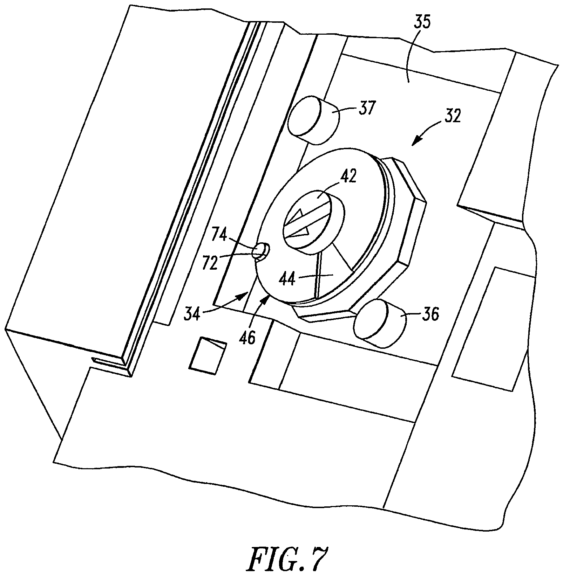

Figure 7 shows the trip unit 9 of Figure 1 with the faceplate 31 removed to show internal structures. This shows that the movable indicator 34 and the selector switch 32 are structured to fit in the volume of the trip unit housing 26.

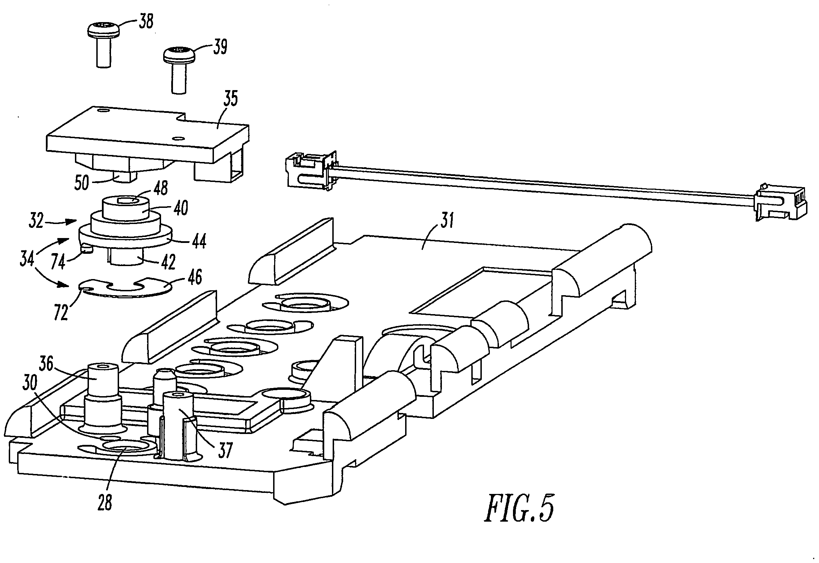

Figure 8 shows a top plan view of the movable indicator 34 and the selector switch 32 of Figure 5. The peripheral member 44, as modified by the indicator member 46, includes a first portion 68 with a first indicia corresponding to the number of predetermined instantaneous current conditions 22 and a different second portion 70 with a different second indicia corresponding to the number of predetermined arc reduction maintenance system current conditions 24. For example, the first indicia is a first color (e.g., without limitation, white) of the indicator member 46 and the first portion 68, and the second different indicia is a second different color (e.g., without limitation, blue) of the peripheral member 44. To facilitate proper positioning of the indicator member 46, the indicator member 46 includes an orientation notch 72 and the peripheral member 44 includes a post 74, which receives the orientation notch 72.

Figure 9 shows a top plan view of another movable indicator 34' and another selector switch 32'. Here, the peripheral member 44' is similar to the peripheral member 44 of Figure 8, except that the indicator member 46 is not employed, the peripheral member 44' is a color (e.g., without limitation, white) to form portion 68', and the different portion 70' is a different color (e.g., without limitation, blue), which is suitably applied (e.g., without limitation, painted; impregnated) to that portion 70'.

The disclosed trip unit 9 allows for fine adjustment of the interruption current on the ARMS current conditions 24 of about 2.5 per unit (p.u.) and about 4 p.u. for the ARMS mode of operation of the circuit breaker 1. The trip unit 9 employs the example rotary selector switch 32, the peripheral member 44 and the indicator member 46 to provide a movable indication for the lowest two ARMS current conditions 24. For example and without limitation, an example blue (although any suitable color or other suitable indicia may be employed) flag provides visual indication and distinguishes the two ARMS current conditions 24 from the other relatively higher instantaneous current conditions 22, which correspond to a different white (although any suitable different color or other suitable different indicia may be employed) flag that provides a different visual indication. This advantageously provides an indication to the operator of, or maintenance person for, the circuit breaker 1 and/or the electrical system 2 even when the circuit breaker 1 and/or electrical system 2 are momentarily de-energized. Hence, the operator or maintenance person knows whether a relatively lower ARMS current condition setting or a relatively higher instantaneous current condition setting has been selected by the selector switch 32.

## Claims

1. An electrical switching apparatus (1) comprising:
separable contacts (17A,17B,17C);
an operating mechanism (15) structured to open and close said separable contacts;
a trip mechanism (9) cooperating with said operating mechanism to trip open said separable contacts, said trip mechanism comprising:
a housing (26) comprising a first opening (28) and a second opening (30),
a sensor (7A,7B,7C) structured to sense a current flowing through said separable contacts and to provide a signal (8) representative of said current,
a selector switch (32) disposed proximate the first opening of said housing, said selector switch being structured to select one of a number of predetermined instantaneous current conditions (22) and a number of predetermined arc reduction maintenance system current conditions (24), and
a trip circuit (11,20) cooperating with said sensor and said selector switch to evaluate said signal representative of said current with respect to the selected one of said number of predetermined instantaneous current conditions and said number of predetermined arc reduction maintenance system current conditions, and responsively cause said operating mechanism to trip open said separable contacts; **characterised by** a movable indicator (34) cooperating with said selector switch, said movable indicator being disposed proximate the second opening of said housing, said movable indicator being structured to indicate whether one of said number of predetermined instantaneous current conditions or one of said number of predetermined arc reduction maintenance system current conditions is selected by said selector switch.

2. The electrical switching apparatus (1) of Claim 1 wherein said electrical switching apparatus includes a frame rating; wherein said number of predetermined arc reduction maintenance system current conditions include a first current condition (54) of about two and one-half times said frame rating and a second current condition (56) of about four times said frame rating and/or wherein said number of predetermined instantaneous current conditions include a plurality of different current conditions (58,60,62,64,66) between about six times said frame rating and about twelve times said frame rating and/or wherein said number of predetermined arc reduction maintenance system current conditions include a plurality of different first current conditions (54,56), said number of predetermined instantaneous current conditions include a plurality of different second current conditions (58,60,62,64,66), and all of said different second current conditions are greater than all of said different first current conditions.

3. The electrical switching apparatus (1) of Claim 1 wherein said selector switch is a rotary selector switch (32) including a pivot member (40) pivotally disposed with respect to said housing and a selector member (42) coupled to said pivot member, said selector member being disposed at the first opening of said housing; and wherein said movable indicator is a peripheral member (44) peripherally disposed about said selector member and movable therewith, said peripheral member being disposed at the second opening of said housing.

4. The electrical switching apparatus (1) of Claim 3 wherein said peripheral member includes a first portion (68;68') with a first indicia corresponding to said number of predetermined instantaneous current conditions and a different second portion (70;70') with a different second indicia corresponding to said number of predetermined arc reduction maintenance system current conditions, and/or wherein said first indicia is a first color and said second different indicia is a second different color.

5. The electrical switching apparatus (1) of Claim 1 wherein said trip circuit comprises a processor (11) and a routine (20) executed by said processor, said routine being structured to evaluate said signal representative of said current with respect to the selected one of said number of predetermined instantaneous current conditions and said number of predetermined arc reduction maintenance system current conditions, and responsively generate a trip signal (10).

6. The electrical switching apparatus (1) of Claim 1 wherein said housing includes a faceplate (31) having the first opening and the second opening; wherein said trip circuit includes a printed circuit board (35) coupled to said faceplate; wherein said selector switch is pivotally coupled to said printed circuit board; and wherein said movable indicator is peripherally coupled to said selector switch, said movable indicator being structured to pivot with said selector switch.

7. The electrical switching apparatus (1) of Claim 1 wherein said selector switch is a rotary selector switch (32) including a pivot member (40) pivotally disposed with respect to said housing and a selector member (42) coupled to said pivot member, said selector member being disposed at the first opening of said housing; and wherein said movable indicator comprises a peripheral member (44) peripherally disposed about said selector member and an indicator member (46) coupled to said peripheral member, said indicator member being disposed at the second opening of said housing.

8. A trip unit (9) for a circuit interrupter (1) for an electrical circuit (2), said trip unit comprising:
a housing (26) comprising a first opening (28) and a second opening (30);
a sensor (7A,7B,7C) structured to sense a current flowing in said electrical circuit and to provide a signal (8) representative of said current;
a selector switch (32) disposed proximate the first opening of said housing, said selector switch being structured to select one of a number of predetermined instantaneous current conditions (22) and a number of predetermined arc reduction maintenance system current conditions (24);
a trip mechanism (11,20) cooperating with said sensor and said selector switch to evaluate said signal representative of said current with respect to the selected one of said number of predetermined instantaneous current conditions and said number of predetermined arc reduction maintenance system current conditions, and responsively generate a trip signal (10); **characterised by** a movable indicator (34) cooperating with said selector switch, said movable indicator being disposed proximate the second opening of said housing, said movable indicator being structured to indicate whether one of said number of predetermined instantaneous current conditions or one of said number of predetermined arc reduction maintenance system current conditions is selected by said selector switch.

9. The trip unit (9) of Claim 8 wherein said circuit interrupter includes a frame rating; and wherein said number of predetermined arc reduction maintenance system current conditions include a first current condition (54) of about two and one-half times said frame rating and a second current condition (56) of about four times said frame rating and/or wherein said number of predetermined instantaneous current conditions include a plurality of different current conditions (58,60,62,64,66) between about six times said frame rating and about twelve times said frame rating and/or wherein said number of predetermined arc reduction maintenance system current conditions include a plurality of different first current conditions (54,56), said number of predetermined instantaneous current conditions include a plurality of different second current conditions (58,60,62,64,66), and all of said different second current conditions are greater than all of said different first current conditions.

10. The trip unit (9) of Claim 8 wherein said selector switch is a rotary selector switch (32) including a pivot member (40) pivotally disposed with respect to said housing and a selector member (42) coupled to said pivot member, said selector member being disposed at the first opening of said housing; and wherein said movable indicator is a peripheral member (44) peripherally disposed about said selector member and movable therewith, said peripheral member being disposed at the second opening of said housing.

11. The trip unit (9) of Claim 10 wherein said peripheral member includes a first portion (68;88') with a first indicia corresponding to said number of predetermined instantaneous current conditions and a different second portion (70;70') with a different second indicia corresponding to said number of predetermined arc reduction maintenance system current conditions, and/or wherein said first indicia is a first color, and said second different indicia is a second different color.

12. The trip unit (9) of Claim 11 wherein said first color is white; and wherein said second different color is blue.

13. The trip unit (9) of Claim 8 wherein said trip mechanism comprises a processor (11) and a routine (20) executed by said processor, said routine being structured to evaluate said signal representative of said current with respect to the selected one of said number of predetermined instantaneous current conditions and said number of predetermined arc reduction maintenance system current conditions, and responsively generate said trip signal.

14. The trip unit (9) of Claim 8 wherein said housing includes a faceplate (31) having the first opening and the second opening; wherein said trip mechanism includes a printed circuit board (35) coupled to said faceplate; wherein said selector switch is pivotally coupled to said printed circuit board; and wherein said movable indicator is peripherally coupled to said selector switch, said movable indicator being structured to pivot with said selector switch.

15. The trip unit (9) of Claim 8 wherein said selector switch is a rotary selector switch (32) including a pivot member (40) pivotally disposed with respect to said housing and a selector member (42) coupled to said pivot member, said selector member being disposed at the first opening of said housing; and wherein said movable indicator comprises a peripheral member (44) peripherally disposed about said selector member and an indicator member (46) coupled to said peripheral member, said indicator member being disposed at the second opening of said housing.

## Patentansprüche

1. Ein elektrisches Schaltgerät (1), welches Folgendes aufweist:
trennbare Kontakte (17A, 17B, 17C);
einen Betriebsmechanismus (15), aufgebaut zum Öffnen und Schließen der trennbaren Kontakte;
einen Auslösemechanismus (9), der mit dem Betriebsmechanismus zusammenarbeitet, um die trennbaren Kontakte zu öffnen, wobei der Auslösemechanismus Folgendes aufweist:
ein Gehäuse (26) mit einer ersten Öffnung (28) und einer zweiten Öffnung (30),
einen Sensor (7A, 7B, 7C) aufgebaut zum Abfühlen eines durch die trennbaren Kontakte fließenden Stromes und zur Lieferung eines den Strom repräsentierenden Signals (8),
einen Wählschalter (32) angeordnet nahe der ersten Öffnung des Gehäuses und aufgebaut zur Auswahl eines Stromzustandes, ausgewählt aus einer Anzahl von vorbestimmten augenblicklichen Stromzuständen (22) und einer Anzahl von vorbestimmten Bogenreduktions-Wartungssystemstromzuständen oder Bedingungen (24) und
eine Auslöseschaltung (11, 20), die mit dem Sensor und mit dem Auswählschalter zusammenarbeitet, um das erwähnte Signal, welches repräsentativ für den Strom ist, bezüglich des einen ausgewählten Stromzustandes aus der Anzahl von vorbestimmten augenblicklichen Stromzuständen und der Anzahl der vorbestimmten Bogenreduktions-Wartungssystemstromzuständen auszuwählen und darauf ansprechend zu bewirken, dass der Betriebsmechanismus die trennbaren Kontakte öffnet,
**gekennzeichnet durch**
eine bewegliche Anzeigevorrichtung (34), die mit dem Wählschalter zusammenarbeitet, wobei die bewegliche Anzeigevorrichtung benachbart zu der zweiten Öffnung des Gehäuses angeordnet ist, wobei die bewegliche Anzeigevorrichtung aufgebaut ist zur Anzeige ob einer der erwähnten Anzahl von vorbestimmten augenblicklichen Stromzuständen oder einer der erwähnten Anzahl von vorbestimmten Bogenreduktions-Wartungssystemstromzuständen **durch** den Wählschalter ausgewählt ist.

2. Schaltgerät nach Anspruch 1, wobei das elektrische Schaltgerät eine "frame rating"(z.B. der maximale kontinuierliche Strom) aufweist;
wobei die Anzahl vorbestimmter Bogenreduktions-Wartungssystemstromzustände einen ersten Stromzustand (54) von dem ungefähr 2 ½-fachen des erwähnten "frame ratings" aufweist und einen zweiten Stromzustand (56) von ungefähr dem 4-fachen des erwähnten "frame rating" aufweist und / oder wobei die Anzahl der vorbestimmten augenblicklichen Stromzustände eine Vielzahl von unterschiedlichen Stromzuständen (58,60,62,64,66) zwischen ungefähr dem 6 fachen des "frame ratings" und ungefähr dem 12 fachen des "frame ratings" aufweist
und/oder wobei die Anzahl der vorbestimmten Bogenreduktions- Wartungssystemstromzuständen eine Vielzahl von unterschiedlichen ersten Stromzuständen (54,56) aufweist, wobei die Anzahl der vorbestimmten augenblicklichen Stromzustände eine Vielzahl von unterschiedlichen zweiten Stromzuständen (58, 60, 62, 64, 66) umfasst und wobei ferner sämtliche der erwähnten unterschiedlichen zweiten Stromzustände größer sind als alle der unterschiedlichen ersten Stromzustände.

3. Schaltgerät nach Anspruch 1, wobei der erwähnte Wählschalter ein Drehwählschalter (32) ist mit einem Schwenkglied (40) welches schwenkbar bezüglich des Gehäuses angeordnet ist und mit einem Wählglied (42) gekuppelt mit dem Schwenkglied, wobei das Wählglied an der ersten Öffnung des erwähnten Gehäuses angeordnet ist; und wobei die bewegliche Anzeigevorrichtung ein peripheres Glied (44) ist und zwar peripher angeordnet um das erwähnte Wählglied und beweglich damit, wobei das Peripherglied an der zweiten Öffnung des Gehäuses angeordnet ist.

4. Schaltgerät nach Anspruch 3, wobei das erwähnte Peripherglied einen ersten Teil (68; 68') mit einem ersten Anzeigemittel aufweist und zwar entsprechend der Anzahl der vorbestimmten augenblicklichen Stromzustände und einen unterschiedlichen zweiten Teil (70; 70') mit einem unterschiedlichen zweiten Anzeigemittel entsprechend der Anzahl der vorbestimmten Bogenreduktions-Wartungssystemstromzustände und/oder wobei das erste Anzeigemittel eine erste Farbe das zweite unterschiedliche Anzeigemittel eine zweite unterschiedliche Farbe ist.

5. Schaltgerät nach Anspruch 1, wobei die Auslöseschaltung einen Prozessor (11) und eine durch den Prozessor ausgeführte Routine (20) aufweist, wobei die Routine aufgebildet ist zur Auswertung des für den Strom repräsentativen Signals bezüglich des ausgewählten einen Zustandes der Anzahl von vorbestimmten augenblicklichen Stromzuständen und der erwähnten Anzahl von vorbestimmten Bogenreduktions-Wartungssystemstromzuständen, und darauf ansprechendes Erzeugen eines Auslösesignals (10).

6. Schaltgerät nach Anspruch 1, wobei das erwähnte Gehäuse eine Stirnplatte (31) aufweist und zwar mit einer ersten Öffnung und einer zweiten Öffnung; wobei die Auslöseschaltung eine gedruckte Schaltungsplatte (35) umfasst und zwar gekuppelt mit der Stirnplatte;
wobei der Wählschalter schwenkbar mit der gedruckten Schaltungsplatte gekuppelt ist; und
wobei die bewegliche Anzeigevorrichtung peripher mit dem Wählschalter gekuppelt ist, wobei die bewegliche Anzeigevorrichtung aufgebaut ist um sich mit dem Wählschalter zu verschwenken.

7. Schaltgerät nach Anspruch 1, wobei der Wählschalter ein Drehwählschalter (32) ist, einschließlich eines Schwenkglieds (40) schwenkbar angeordnet bezüglich des Gehäuses und ein Wählglied (42) gekuppelt mit dem Schwenkglied, wobei das Wählglied angeordnet ist an der ersten Öffnung des Gehäuses; und
wobei die bewegbaren Anzeigemittel ein Umfangsglied (44) aufweisen und zwar peripher und umfangsmäßig angeordnet um das erwähnte Wählglied herum und ein Anzeigeglied (46) gekuppelt mit dem Umfangsglied, wobei das Anzeigeglied an der zweiten Öffnung des Gehäuses angeordnet ist.

8. Eine Auslöseeinheit (9) für einen Schalter (1) für eine elektrische Schaltung (2), wobei die Auslöseeinheit Folgendes aufweist:
ein Gehäuse (26) mit einer ersten Öffnung (28) und einer zweiten Öffnung (30);
einen Sensor (7A, 7B, 7C) aufgebaut zu Abfühlung eines in der elektrischen Schaltung fließenden Stromes und zur Lieferung eines für den Strom repräsentativen Signals (8);
einen Wählschalter (32) angeordnet nahe der ersten Öffnung des Gehäuses, wobei der Wählschalter strukturiert ist um einen Zustand aus einer Anzahl von vorbestimmten augenblicklichen Stromzuständen (22) und einer Anzahl von vorbestimmten Bogenreduktions-Wartungssystemstromzuständen (24) auszuwählen;
einen Auslösemechanismus (11,20) der mit dem Sensor und mit dem Wählschalter zusammenarbeitet, um das erwähnte Signal repräsentativ für den erwähnten Strom bezüglich des ausgewählten einen Zustands der erwähnten Anzahl der vorbestimmten augenblicklichen Stromzuständen und der erwähnten Anzahl von vorbestimmten Bogenreduktions-Wartungssystemstromzuständen auszuwählen, und
darauf ansprechendes Erzeugen eines Auslösesignals (10)
**gekennzeichnet durch**
eine bewegliche Anzeigevorrichtung (34), die mit dem Wählschalter zusammenarbeitet, wobei die bewegliche Anzeigevorrichtung nahe der zweiten Öffnung des Gehäuses angeordnet ist, und wobei die bewegliche Anzeigevorrichtung aufgebaut ist zur Anzeige einer der Zustände aus der erwähnten Anzahl von vorbestimmten augenblicklichen Stromzuständen oder einer der erwähnten Anzahl von vorbestimmten Bogenreduktions-Wartungssystemstromzuständen **durch** den erwähnten Wählschalter ausgewählt ist.

9. Auslöseeinheit nach Anspruch 8, wobei der Schalter eine "frame rating" aufweist; und wobei die Anzahl der vorbestimmten Bogenreduktions-Wartungssystemstromzustände einen ersten Stromzustand (54) aufweist von ungefähr dem 2 ½-fachen des "frame ratings" und einen zweiten Stromzustand (56) von ungefähr dem 4-fachen des "frame ratings" und/oder;
wobei die Anzahl der vorbestimmten augenblicklichen Stromzustände eine Vielzahl von unterschiedlichen Stromzuständen (58, 60, 62, 64, 66) umfasst und zwar zwischen ungefähr dem 6-fachen des "frame ratings" und dem ungefähr 12-fachen des "frame ratings" und/oder wobei die Anzahl der vorbestimmten Bogenreduktions-Wartungssystemstromzuständen eine Vielzahl von unterschiedlichen ersten Stromzuständen (54, 56) aufweist, wobei die Anzahl von vorbestimmten augenblicklichen Stromzuständen eine Vielzahl von unterschiedlichen zweiten Stromzuständen (58, 60 ,62, 64, 66) umfasst und wobei ferner alle eine der erwähnten unterschiedlichen zweiten Stromzustände größer sind als alle der erwähnten unterschiedlichen ersten Stromzustände.

10. Auslöseeinheit nach Anspruch 8, wobei der Wählschalter ein Drehwählschalter (32) ist einschließlich eines Schwenkglieds (40) schwenkbar angeordnet bezüglich des Gehäuses und ferner mit einem Wählglied (42) gekuppelt mit dem Schwenkglied, welches an der ersten Öffnung des Gehäuses angeordnet ist; und
wobei die bewegliche Anzeigevorrichtung ein Peripherglied (44) ist und zwar peripher oder umfangsmäßig angeordnet um das erwähnte Wählglied herum und bewegbar damit, wobei das Peripherglied an der zweiten Öffnung des Gehäuses angeordnet ist.

11. Auslöseeinheit nach Anspruch 10, wobei das Peripherglied einen ersten Teil (68, 68') mit einem ersten Anzeigenmittel entsprechend der Anzahl von vorbestimmten augenblicklichen Strombedingungen bzw. Zuständen aufweist, und einen unterschiedlichen zweiten Teil (70; 70') mit einem unterschiedlichen zweiten Anzeigemittel entsprechend der Anzahl von vorbestimmten Bogenreduktions-Wartungssystemstromzuständen; und/oder
wobei die ersten Anzeigemittel eine erste Farbe und die zweiten unterschiedlichen Anzeigemittel eine zweite unterschiedliche Farbe besitzen.

12. Auslöseeinheit nach Anspruch 11, wobei die erste Farbe weiß und die zweite unterschiedliche Farbe blau ist.

13. Auslöseeinheit nach Anspruch 8, wobei der Auslösemechanismus einen Prozessor (11) und eine Routine (20) ausgeführt durch den Prozessor aufweist, wobei die Routine aufgebaut ist zur Auswertung des erwähnten Signals repräsentativ für den Strom und zwar bezüglich des einen ausgewählten Zustands der Anzahl von vorbestimmten augenblicklichen Stromzuständen und der erwähnten Anzahl von vorbestimmten Bogenreduktions-Wartungssystemstromzuständen und darauf ansprechend Erzeugen des Auslösesignals.

14. Auslöseeinheit nach Anspruch 8, wobei das Gehäuse eine Stirnplatte (31) aufweist und zwar mit einer ersten Öffnung und einer zweiten Öffnung;
wobei der Auslösemechanismus eine gedruckte Schaltungsplatte (35) gekuppelt mit der Stirnplatte aufweist;
wobei der Wählschalter schwenkbar mit der gedruckten Schaltungsplatte gekuppelt ist und wobei die bewegliche Anzeigevorrichtung peripher mit dem Wählschalter gekuppelt ist, wobei die bewegliche Anzeigevorrichtung strukturiert ist zum Verschwenken mit dem Wählschalter.

15. Auslöseeinheit nach Anspruch 8, wobei der Wählschalter ein Drehwählschalter (32) mit einem Schwenkglied (40) ist, schwenkbar angeordnet bezüglich des Gehäuses und wobei ein Wählglied (42) mit dem Schwenkglied gekuppelt ist, wobei ferner das Wählglied an der ersten Öffnung des Gehäuses angeordnet ist; und
wobei die bewegliche Anzeigevorrichtung ein Peripher- oder Umfangsglied (44) aufweist und zwar peripher angeordnet um das Wählglied herum und mit einem Anzeigeglied (46) gekuppelt mit dem Peripherglied, wobei das Anzeigeglied in der zweiten Öffnung des Gehäuses angeordnet ist.

## Revendications

1. Appareil de commutation électrique (1) comprenant ;
des contacts séparables (17A, 17B, 17C) ;
un mécanisme de manoeuvre (15) structuré de manière à ouvrir et fermer lesdits contacts séparables ;
un mécanisme de déclenchement (9) coopérant avec ledit mécanisme de manoeuvre pour déclencher l'ouverture desdits contacts séparables, ledit mécanisme de déclenchement comprenant :
un boîtier (26) comprenant une première ouverture (28) et une deuxième ouverture (30),
un détecteur (7A, 7B, 7C) structuré pour détecter un courant circulant à travers lesdits contacts séparables et pour fournir un signal (8) représentant ledit courant,
un sélecteur (32) disposé à proximité de la première ouverture dudit boîtier, ledit sélecteur étant structuré de manière à sélectionner une condition parmi un nombre de conditions de courant instantané prédéterminées (22) et un nombre de conditions de courant prédéterminées de système de maintien de réduction d'arc (24), et
un circuit de déclenchement (11, 20) coopérant avec ledit détecteur et ledit sélecteur pour évaluer ledit signal représentant ledit courant par rapport à la condition sélectionnée parmi ledit nombre de conditions de courant instantané prédéterminées et ledit nombre de conditions de courant prédéterminées de système de maintien de réduction d'arc, et amener en réponse ledit mécanisme de manoeuvre à déclencher l'ouverture desdits contacts séparables ;
**caractérisé par**
**le fait qu'**un indicateur mobile (34) coopère avec ledit sélecteur, ledit indicateur mobile étant disposé à proximité de la deuxième ouverture dudit boîtier, ledit indicateur mobile étant structuré de façon à indiquer si l'une dudit nombre de conditions de courant instantané prédéterminées ou l'une dudit nombre de conditions de courant prédéterminées de système de maintien de réduction d'arc est sélectionnée par ledit sélecteur.

2. Appareil de commutation électrique (1) de la revendication 1 dans lequel ledit appareil de commutation électrique comprend une valeur nominale de cadre ; dans lequel ledit nombre de conditions de courant prédéterminées de système de maintien de réduction d'arc comprennent une première condition de courant (54) d'environ deux fois et demi la valeur nominale de cadre et une deuxième condition de courant (56) d'environ quatre fois ladite valeur nominale de cadre et/ou dans lequel ledit nombre de conditions de courant instantané prédéterminées comportent une pluralité de conditions de courant différentes (58, 60, 62, 64, 66) entre environ six fois ladite valeur nominale de cadre et environ douze fois ladite valeur nominale de cadre et/ou dans lequel ledit nombre de conditions de courant prédéterminées de système de maintien de réduction d'arc comprennent une pluralité de premières conditions de courant différentes (54, 56), ledit nombre de conditions de courant instantané prédéterminées comprennent une pluralité de deuxièmes conditions de courant différentes (58, 60, 62, 64, 66), et toutes lesdites deuxièmes conditions de courant différentes sont plus grandes que toutes lesdites premières conditions de courant différentes.

3. Appareil de commutation électrique (1) de la revendication 1 dans lequel ledit sélecteur est un sélecteur rotatif (32) comportant un élément de pivotement (40) disposé en pivotement par rapport audit boîtier et un élément de sélection (42) couplé audit élément de pivotement, ledit élément de sélection étant disposé à la première ouverture dudit boîtier ; et dans lequel ledit indicateur mobile est un élément périphérique (44) disposé autour de périphérie dudit élément de sélection et étant mobile avec celui-ci, ledit élément périphérique étant disposé à la deuxième ouverture dudit boîtier.

4. Appareil de commutation électrique (1) de la revendication 3 dans lequel ledit élément périphérique comprend une première partie (68 ; 68') avec un premier indice correspondant audit nombre de conditions de courant instantané prédéterminées et une deuxième partie différente (70 ; 70') avec un deuxième indice différent correspondant audit nombre de conditions de courant prédéterminées de système de maintien de réduction d'arc et/ou dans lequel ledit premier indice est une première couleur et ledit deuxième indice différent est une deuxième couleur différente.

5. Appareil de commutation électrique (1) de la revendication 1 dans lequel ledit circuit de déclenchement comprend un processeur (11) et un sous-programme (20) exécuté par ledit processeur, ledit sous-programme étant structuré pour évaluer ledit signal représentant ledit courant par rapport à la condition sélectionnée parmi ledit nombre de conditions de courant instantané prédéterminées et ledit nombre de conditions de courant prédéterminées de système de maintien de réduction d'arc, et génère en réponse un signal de déclenchement (10).

6. Appareil de commutation électrique (1) de la revendication 1 dans lequel ledit boîtier comprend une plaque frontale (31) comportant la première ouverture et la deuxième ouverture ; dans lequel ledit circuit de déclenchement comprend une carte de circuit imprimé (35) couplée à ladite plaque frontale ; dans lequel ledit sélecteur est couplé en pivotement à ladite carte de circuit imprimé ; et dans lequel ledit indicateur mobile est couplé en périphérie audit sélecteur, ledit indicateur mobile étant structuré de manière à pivoter avec ledit sélecteur.

7. Appareil de commutation électrique (1) de la revendication 1 dans lequel ledit sélecteur est un sélecteur rotatif (32) comportant un élément de pivotement (40) disposé en pivotement par rapport audit boîtier et un élément de sélection (42) couplé audit élément de pivotement, ledit élément de sélection étant disposé à la première ouverture dudit boîtier ; et dans lequel ledit indicateur mobile comprend un élément périphérique (44) disposé en périphérie autour dudit élément de sélection et un élément indicateur (46) couplé audit élément périphérique, ledit élément indicateur étant disposé à la deuxième ouverture dudit boîtier.

8. Unité de déclenchement (9) pour un interrupteur de circuit (1) pour un circuit électrique (2), ladite unité de déclenchement comprenant :
un boîtier (26) comprenant une première ouverture (28) et une deuxième ouverture (30) ;
un détecteur (7A, 7B, 7C) structuré pour détecter un courant circulant dans ledit circuit électrique et pour fournir un signal (8) représentant ledit courant ;
un sélecteur (32) disposé à proximité de la première ouverture dudit boîtier, ledit sélecteur étant structuré de manière à sélectionner une condition parmi un nombre de conditions de courant instantané prédéterminées (22) et un nombre de conditions de courant prédéterminées de système de maintien de réduction d'arc (24) ;
un mécanisme de déclenchement (11, 20) coopérant avec ledit détecteur et ledit sélecteur pour évaluer ledit signal représentant ledit courant par rapport à la condition sélectionnée parmi ledit nombre de conditions de courant instantané prédéterminées et ledit nombre de conditions de courant prédéterminées de système de maintien de réduction d'arc, et générer en réponse un signal de déclenchement (10) ;
**caractérisé par**
**le fait qu'**un indicateur mobile (34) coopère avec ledit sélecteur, ledit indicateur mobile étant disposé à proximité de la deuxième ouverture dudit boîtier, ledit indicateur mobile étant structuré de façon à indiquer si l'une dudit nombre de conditions de courant instantané prédéterminées ou l'une dudit nombre de conditions de courant prédéterminées de système de maintien de réduction d'arc est sélectionnée par ledit sélecteur.

9. Unité de déclenchement (9) de la revendication 8 dans laquelle ledit interrupteur de circuit comprend une valeur nominale de cadre ; et dans laquelle ledit nombre de conditions de courant prédéterminées de système de maintien de réduction d'arc comprennent une première condition de courant (54) d'environ deux fois et demi la valeur nominale de cadre et une deuxième condition de courant (56) d'environ quatre fois ladite valeur nominale de cadre et/ou dans laquelle ledit nombre de conditions de courant instantané prédéterminées comportent une pluralité de conditions de courant différentes (58, 60, 62, 64, 66) entre environ six fois ladite valeur nominale de cadre et environ douze fois ladite valeur nominale de cadre et/ou dans laquelle ledit nombre de conditions de courant prédéterminées de système de maintien de réduction d'arc comprennent une pluralité de premières conditions de courant différentes (54, 56), ledit nombre de conditions de courant instantané prédéterminées comprennent une pluralité de deuxièmes conditions de courant différentes (58, 60, 62, 64, 66), et toutes lesdites deuxièmes conditions de courant différentes sont plus grandes que toutes lesdites premières conditions de courant différentes.

10. Unité de déclenchement (9) de la revendication 8 dans laquelle ledit sélecteur est un sélecteur rotatif (32) comportant un élément de pivotement (40) disposé en pivotement par rapport audit boîtier et un élément de sélection (42) couplé audit élément de pivotement, ledit élément de sélection étant disposé à la première ouverture dudit boîtier, et dans laquelle ledit indicateur mobile est un élément périphérique (44) disposé en périphérie autour dudit élément de sélection et étant mobile avec celui-ci, ledit élément périphérique étant disposé à la deuxième ouverture dudit boîtier.

11. Unité de déclenchement (9) de la revendication 10 dans laquelle ledit élément périphérique comprend une première partie (68 ; 68') avec un premier indice correspondant audit nombre de conditions de courant instantané prédéterminées et une deuxième partie différente (70 ; 70') avec un deuxième indice différent correspondant audit nombre de conditions de courant prédéterminées de système de maintien de réduction d'arc et/ou dans laquelle ledit premier indice est une première couleur et ledit deuxième indice différent est une deuxième couleur différente.

12. Unité de déclenchement (9) de la revendication 11 dans laquelle ladite première couleur est blanche ; et dans laquelle ladite deuxième couleur différente est bleue.

13. Unité de déclenchement (9) de la revendication 8 dans laquelle ledit mécanisme de déclenchement comprend un processeur (11) et un sous-programme (20) exécuté par ledit processeur, ledit sous-programme étant structuré pour évaluer ledit signal représentant ledit courant par rapport à la condition sélectionnée parmi ledit nombre de conditions de courant instantané prédéterminées et ledit nombre de conditions de courant prédéterminées de système de maintien de réduction d'arc, et générer en réponse un signal de déclenchement (10).

14. Unité de déclenchement (9) de la revendication 8 dans laquelle ledit boîtier comprend une plaque frontale (31) comprenant la première ouverture et la deuxième ouverture ; dans laquelle ledit mécanisme de déclenchement comprend une carte de circuit imprimé (35) couplée à ladite plaque frontale ; dans laquelle ledit sélecteur est couplé en pivotement à ladite carte de circuit imprimé ; et dans laquelle ledit indicateur mobile est couplé en périphérie audit sélecteur, ledit indicateur mobile étant structuré de manière à pivoter avec ledit sélecteur.

15. Unité de déclenchement (9) de la revendication 8 dans laquelle ledit sélecteur est un sélecteur rotatif (32) comportant un élément de pivotement (40) disposé en pivotement par rapport audit boîtier et un élément de sélection (42) couplé audit élément de pivotement, ledit élément de sélection étant disposé à la première ouverture dudit boîtier ; et dans laquelle ledit indicateur mobile comprend un élément périphérique (44) disposé en périphérie autour dudit élément de sélection et un élément indicateur (46) couplé audit élément périphérique, ledit élément indicateur étant disposé à la deuxième ouverture dudit boîtier.
